Europäisches Patentamt

European Patent Office

Office européen des brevets

(11) Publication number: **0 120 177**
**A1**

(12) # EUROPEAN PATENT APPLICATION

(21) Application number: **83830067.1**

(22) Date of filing: **29.03.83**

(51) Int. Cl.³: **F 16 B 7/04**
**F 16 B 2/22**

(43) Date of publication of application:
**03.10.84 Bulletin 84/40**

(84) Designated Contracting States:
**AT BE CH DE FR GB IT LI LU NL SE**

(71) Applicant: **Dante, Giovetti**
**Viale Roma, 17**
**I-40139 Bologna(IT)**

(72) Inventor: **Dante, Giovetti**
**Viale Roma, 17**
**I-40139 Bologna(IT)**

(74) Representative: **Sassatelli, Franco T.**
**c/o INIP Via Mazzini N. 170**
**I-40139 Bologna(IT)**

(54) Self-blocking fastener for composing barrier flat shaped pieces.

(57) The fastener consists of two components, one of which is U-shaped and works as a spring on a binding band for containing a pair of shaped parts in adherence condition; the other component can be engaged in succession on the first one and carries out the condition of integrating operating binding. On the two lengths in conjunction of the shaped parts to connect, the U-shaped spring foreseen with a slight conicity to facilitate sliding will be at first engaged.

As this position has been reached, the lance-shaped terminals (1a, 2a) of its arms (3a, 4a) with their inside relief (6a, 7a) act as retaining leaf permitting the starting engagement condition. In ana analoguos way, the blocking body is applied by means of a striker, thus letting the lance-shaped terminals of the arms reach their engaging seats (3b, 4b).

FIG.6

EP 0 120 177 A1

Croydon Printing Company Ltd.

- 1 -

<u>Self-blocking fastener for composing barrier flat shaped pieces.</u>
The invention refers to a self-blocking fastener which substantially allows the quick mounting of flat shaped pieces for barriers only proceeding according to mnemonic collation phases of engagement and riveting of the fastener components, without being forced to intervene on the parts to compose.

In the building industry, for composing barriers such as used for terraces, staircases, separation walls and others, flat shaped parts in anodized aluminium are currently employed which are compoesed on a line by means of engagement system with through bores and interposed stud. Blocking is carried out by means of nuts to be fitted on the outgetting threaded pins. This procedure requires the intervention of a skilled person for equalizing the shaped parts to compose, weakens the structure and, therefore, might bring the material with modest resistance, like alluminium, to barring of the parts in the remounting phase of the structure, or when engaging means are used which do not exactly correspond to the required one. The mechanical predisposition on the employ spot, moreover, turns out to be burdensome as it require the presence of skilled personnel.

The invention enables the solution of the problem through a self-blocking means which can be shipped by using percussion conventional tools permitting principally to block in an integrally operating way the flat shaped parts without interfering in any way on their structure. This is possible because a blocking device is employed consisting of two components, one of which to fit at first on the pair of the combined and adhering portions of the shaped parts to connect, so that the starting engaging condition is carried out, in retaining condition when disengaging, and the other component to engage in succession on the first one from the other part of its engaging position: the engaging condition integrally operating of the whole and, therefore, of the two interposed shaped components is thus obtained. The pair of shaped parts is at first connected by engaging the first component consisting of a U-shaped spring operating on an binding band. This one has been foreseen with a slight conicity with a view to facilitating sliding which occurs by creeping on the walls of the inner lance-shaped ends of the arm pair. As soon as the combined pair of flat shaped parts has reached the engagement seat, the said lance-sha ped ends, with their inside reliefs, will operate as retention leaves and improve the starting binding condition. The second component is substantially consisting of a plug with a stiff structure characterized by corresponding inner lodging seats for the pair of lance-shaped ends of the other component.

By proceeding in this way, the composition is possible on line of anodized aluminium flat shaped parts by means of fasteners according to quick operation phases that can be carried out with mnemonic collation, thus performing the connections according to the mounting requirements. The above components are fitted in succession to form the fastener employing conventional percussion tools.

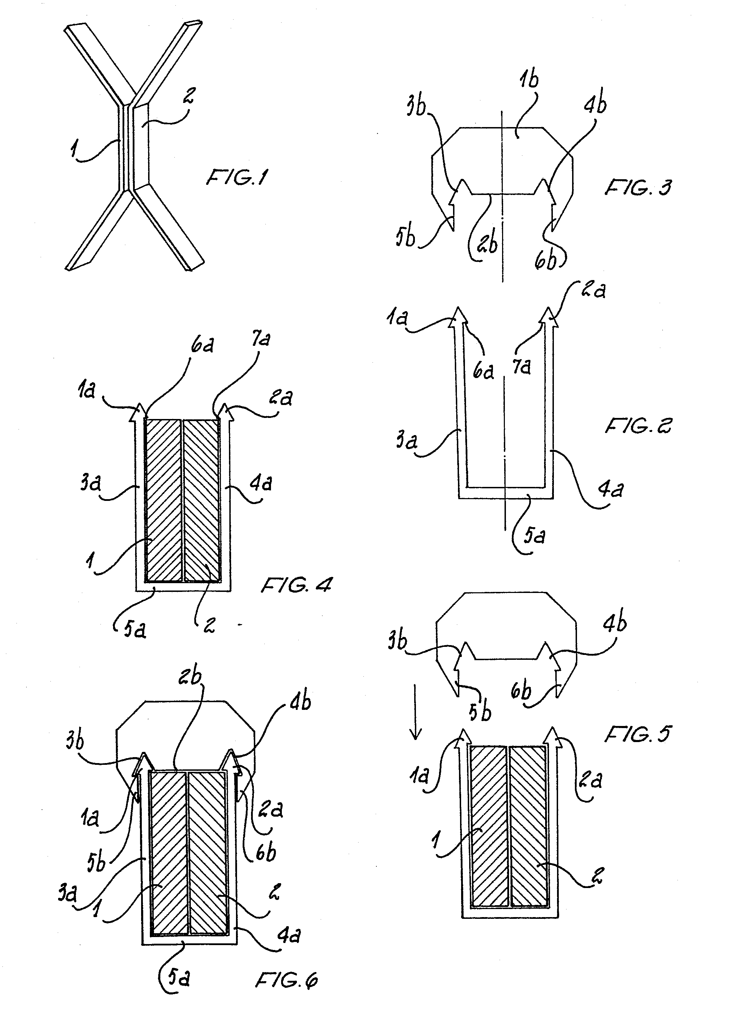

A not limiting execution form of the procedure is illustrated by the dra wings of table 1, where fig. 1 is a perspective view of two flat shaped parts in a suitable position fo the composition. Fig. 2 is the U-shaped spring component seen from above showing the pair of the lance-shaped ends of the arms. Fig. 3 shows the blocking plug in a disengaged position but prospicient to, with the engaging seats. Fig. 4 still shows the component of fig. 2, but the pair of shaped parts is contained in a starting engaging condition. From fig. 5 th binding condition of the previous figure can be noted, but showing the blocking plug seen before its engage-

ment. Fig. 6 is the cross section illustrating the self-blocking fastener permanently engaging the pair of shaped flat parts.

The version employs the pair of shaped parts 1 and 2, the intermediate portions of which are set in adherence to allow the containement engagement of the spring (A) by sliding on the relevant walls of the lance-shaped ends 1a and 2a of its arms 3a and 4a brought on 5a. In input condition, the inside reliefs 6a and 7a of the lance-shaped ends are acting as leaves preventing the shaped parts to get out. The condition of integrally operating seal can be obtained by fitting the stiff part (B) characterized by part 1b, in which flat part 2b is foreeseen beating on the shaped portions 1 and 2. Hollows in symmetrical disposition 3b and 4b are foreseen sidewise apt to act as engaging seats for lances 1a and 2a, blocking being possible through the tooth gradual reductions of entrances 5b and 6b. This permits the integrally operating composition of the fastener components. The materials, the form of the collation components which are carrying out the engagement, the form of the collation components which are carrying out the engagement, the form of the shaped parts to compose and everything else in this connection may be otherwise executed.

- 1 -

0120177

Claims.

1) Self-blocking fastener for composing barrier flat shaped pieces, characterized by the fact that it consists of two components, one of which is U-shaped and acts as a spring on the band on cantainment binding of the shaped part pair in adherence condition. On the two combined lengths of the shaped parts, the U-shaped spring is engaged, which is foreseen with a slight conicity for facilitating sliding. Once arrived in this position, the lance-shaped ends of its arms with their inside reliefs act as retention leaves determining the initial binding conditions. The second component is plug-shaped with stiff structure, characterized by lodging seats in retention condition of the lance-shaped end of the first component. The device is mounted according to engaging phases that can be carried out with a conventional percussion means and mnemonic collation phases.

2) Self-blocking fastener for composing barrier flat shaped pieces, according to the previous claim, characterized bu the fact that employs the pair of shaped parts 1 and 2, the intermediate portions of which are set in adherence to allow the containement engagement of the spring (A) by sliding on the relevant walls of the lance-shaped ends 1a and 2a of its arms 3a and 4a brought on 5a. In input conditions, the inside reliefs 6a and 7a of the lance-shaped ends are acting as leaves preventing the shaped parts to get out.

3) Self-blocking fastener for composing barrier flat shaped pieces, according to the previous claims, characterized by the fact that the condition integrally operating seal can be obtained by fitting the stiff part (B) characterized by part 1b, in which flat part 2b is foreeseen beating on the shaped portions 1 and 2. Hollows in symmetrical disposition 3b and 4b are foreseen sidewise apt to act as engaging seats for lances 1a and 2a, blocking being possible through the tooth gradual reductions entrances 5b and 6b. This permits the integrally operating composition of the fastener components.

0120177

1/1

FIG.1

FIG.2

FIG.3

FIG.4

FIG.5

FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 094 483 (R.E. BUSCH) * Column 2, lines 20-25, 35-37, 55-61; figures 1,3,4,6 * | 1-3 | F 16 B 7/04 F 16 B 2/22 |
| | --- | | |
| Y | GB-A-1 191 102 (DOM HOLDINGS LTD.) * Page 1, lines 73-88, 1-15; figures 1-3 * | 1-3 | |
| | --- | | |
| A | CH-A- 544 849 (FA. RUDOLF OBERREICH) | | |
| | ----- | | |

TECHNICAL FIELDS SEARCHED (Int. Cl. ³)

F 16 B
E 04 H
F 16 S
E 06 B
E 04 F
F 16 L

The present search report has been drawn up for all claims

| Place of search THE HAGUE | Date of completion of the search 14-06-1984 | Examiner VAN WESTENBRUGGE A. |
|---|---|---|